# EUROPEAN PATENT APPLICATION

(11) **EP 4 549 306 A1**
(43) Date of publication of application: **07.05.2025**
(21) Application number: 22949544.5
(22) Date of filing: 08.07.2022
(51) Int. Cl.: B63B 25/16, F17C 3/02, F17C 13/00, B32B 3/12, F16L 59/065

(54) **HONEYCOMB SANDWICH-TYPE VACUUM INSULATION PANEL AND VACUUM INSULATION PANEL SYSTEM**

(30) Priority: 28.06.2022 KR 20220078871
(71) Applicant: HANKUK CARBON CO., LTD, Miryang-Si, Gyeongsangnam-do 50403 (KR)
(72) Inventor: CHO, Moon Soo, Miryang-si, Gyeongsangnam-do 50403 (KR); CHO, Yun Ho, Miryang-si, Gyeongsangnam-do 50403 (KR)
(74) Representative: v. Bezold & Partner Patentanwälte - PartG mbB
(86) International application number: PCT/KR2022/009989
(87) International publication number: WO 2024/005251

(57) **Abstract**

The present disclosure relates to a honeycomb sandwich type vacuum insulation panel and a vacuum insulation panel system, wherein an insulation panel installed between a primary gas barrier and a secondary gas barrier of a cryogenic liquid fuel storage tank is formed as a honeycomb sandwich panel of a honeycomb structure to improve and maximize insulation of the cryogenic liquid fuel storage tank, and to provide a honeycomb sandwich type vacuum insulation panel and a vacuum insulation panel system capable of minimizing heat loss, wherein in a cryogenic liquid fuel storage tank including a primary gas barrier, an insulation panel, and a secondary gas barrier for accommodating a cryogenic liquid fuel including liquid hydrogen therein, a honeycomb sandwich panel installed between the primary gas barrier and the secondary gas barrier to insulate the cryogenic liquid fuel storage tank; a vacuum film that accommodates the honeycomb sandwich panel inside and vacuumizes; and breakage prevention pads installed at each corner of the honeycomb sandwich panel in contact with the vacuum film to prevent breakage of the vacuum film.

## Description

### [Cross-Reference to Related Applications]

The present application claims priority from Korean Patent Application No. 10-2022-0078871, filed on June 28, 2022, the disclosures of which are incorporated herein by reference.

### [Technical Field]

The present disclosure relates to a honeycomb sandwich type vacuum insulation panel and a multilayer vacuum insulation panel system.

### [Background]

In recent years, the demand for energy has been continuously increasing due to the development of industrialization and the increase in population, and there is an urgent need for alternative energy supply due to the depletion of fossil fuels.

In particular, in the case of South Korea, although the energy consumption ranks among the top 10 in the world, more than 90% of the energy used is dependent on foreign imports, so measures to secure energy are urgently needed.

Meanwhile, liquefied natural gas (LNG) refers to a colorless and transparent cryogenic liquid made by cooling natural gas primarily composed of methane to -163°C, reducing its volume to one six-hundredth.

Such use of liquefied natural gas as an energy resource has led to the development of liquefied cargo carriers capable of transporting liquefied cargoes consisting of large quantities of liquefied natural gas by sea. Such liquefied cargo carriers are equipped with liquefied hydrogen storage tanks for storing and holding liquefied natural gas (LNG) that has been liquefied to a cryogenic state.

The liquid hydrogen storage tanks can be classified into an independent type and a membrane type depending on whether the loads of the liquefied cargo are directly acted upon, and the independent type can be further classified into Type B and Type C.

Here, a membrane type liquefied hydrogen storage tank is configured including a primary gas barrier, an insulation panel, and a secondary gas barrier to store cryogenic liquefied hydrogen (LH2) of -250°C or higher, prevent liquefied natural gas (LNG) from vaporizing in a cryogenic environment, and prevent leakage of gas more stably.

The primary gas barrier consists of a corrugated-shaped membrane sheet made of stainless steel (SUS, STS) and is in direct contact with the liquefied natural gas (LNG), and the secondary gas barrier is installed on the outer side of the primary gas barrier and has a characteristic to prevent gas leakage in case of damage to the primary gas barrier.

An insulation panel is formed of a urethane foam type and is interposed between the primary gas barrier and the secondary gas barrier to prevent the liquefied natural gas (LNG) from being vaporized.

As described above, when the liquid hydrogen storage tank is mounted on a transfer vehicle such as a ship, it is necessary to consider additional loads and frequent refilling due to movement of the supporter, fatigue loads due to pressure variations caused by waves in the internal fluid, and thermal loads due to temperature differences inside the tank, so that a highly robust design is required.

However, the insulation panels of conventional liquid hydrogen storage tanks are made of flexible materials with low structural robustness.

Therefore, there is a need for a liquid hydrogen storage tank having a structure that can minimize heat loss to cryogenic temperatures and satisfy structural robustness to various loads.

### [Summary]

### [Technical Problem]

An object of the present disclosure is to provide a honeycomb sandwich type vacuum insulation panel capable of minimizing heat loss and improving and maximizing insulation of a cryogenic liquid fuel storage tank by forming an insulation panel installed between a primary gas barrier and a secondary gas barrier of the cryogenic liquid fuel storage tank to a honeycomb sandwich panel of a honeycomb structure.

In addition, an object of the present disclosure to provide a honeycomb sandwich type multilayer vacuum insulation panel system capable of blocking external leakage of the leaked cryogenic liquid fuel and securing structural robustness to various loads in case of leakage of cryogenic liquid fuel including liquid hydrogen from a cryogenic liquid fuel storage tank by forming a plurality of honeycomb sandwich panels disposed in a plurality of layers and then stacked in a multilayer.

However, the technical problem to be solved by the present disclosure is not limited to the above-described problem, and other problems not mentioned can be clearly understood by a person skilled in the art from the description of the disclosure described below.

### [Technical Solution]

To achieve the above-mentioned object, a vacuum insulation panel of a honeycomb sandwich type according to the present disclosure, in a cryogenic liquid fuel storage tank including a primary gas barrier, an insulation panel, and a secondary gas barrier for accommodating a cryogenic liquid fuel including liquid hydrogen therein; a honeycomb sandwich panel installed between the primary gas barrier and the secondary gas barrier to insulate the cryogenic liquid fuel storage tank; a vacuum film that accommodates the honeycomb sandwich panel inside and vacuumizes; and breakage prevention pads installed at each corner of the honeycomb sandwich panel in contact with the vacuum film to prevent breakage of the vacuum film.

In one embodiment, the honeycomb sandwich panel may include a honeycomb structure in which a plurality of honeycombs is connected formed, and a composite panel installed in the honeycomb structure.

As a specific embodiment, the honeycomb structure may include a plurality of honeycombs formed with open upper and lower portions, filling spaces formed within the honeycombs, and insulation material filled in each filling space.

In another specific embodiment, the insulation material may include at least one of air, vacuum, aerogel, or insulation powder.

In one embodiment, the honeycomb structure can be used alone or with the composite panels installed on the top surface and bottom surface of the honeycomb structure.

In another embodiment, the composite panel may be formed from a resin and a composite of glass fibers or carbon fibers or aramid fibers or composite fibers.

As another embodiment, the breakage prevention pad may be a semicircular cover body, wherein an insertion groove corresponding to the shape of the corner may be formed therein for insertion and coupling of each corner of the honeycomb sandwich panel.

The honeycomb sandwich type vacuum insulation panel system according to the present disclosure is characterized in that the honeycomb sandwich type vacuum insulation panel is accommodated in the leakage prevention barrier and vacuumed.

In one embodiment, the leakage prevention barrier may be made of a combination of insulation materials including any one or more of Nylon, LLDPE, PET, PI, EVOH, and AlOx.

In another embodiment, a plurality of honeycomb sandwich type vacuum insulation panels may be disposed in the leakage prevention barrier in a thickness direction and may be stacked.

### [Advantageous Effects]

The present disclosure, having the configuration as described above, has the effect that insulation of a cryogenic liquid fuel storage tank can be improved and maximized, heat loss to cryogenic temperature can be minimized, structural robustness to various loads can be secured, and lightweight of an insulation panel can be realized.

In addition, the present disclosure can ensure structural robustness that is not assured by the conventional insulation panel structure, and is appropriate for a cryogenic liquid fuel storage tank for transfer, as the honeycomb sandwich panel is disposed in a plurality in the thickness direction and then stacked in multilayers, thereby ensuring safety through the honeycomb sandwich panel when leakage is occurred in the cryogenic liquid fuel storage tank, and it can be applied as a prismatic membrane type that is widely used in the cargo hold of LNG ships to improve loading efficiency.

In addition, the present disclosure has the effect that the insulation panel can be formed into a honeycomb sandwich panel of a honeycomb structure and attached to a cryogenic liquid fuel storage tank for easy installation without mechanical coupling, and that the insulation performance can be improved by directly attaching and installing the insulation panel to the cryogenic liquid fuel storage tank.

However, the technical effects that can be obtained through the present disclosure is not limited to the above-described effects, and other effects not mentioned can be clearly understood by a person skilled in the art from the description of the disclosure described below.

### [Brief Description of the Drawings]

FIG. 1 is a perspective view schematically illustrating a honeycomb sandwich type vacuum insulation panel according to the present disclosure.
FIG. 2 is an exploded perspective view schematically illustrating a honeycomb sandwich type vacuum insulation panel according to the present disclosure.
FIG. 3 is a side view schematically illustrating a honeycomb sandwich type vacuum insulation panel according to the present disclosure.
FIG. 4 is a diagram schematically illustrating a honeycomb sandwich type vacuum insulation panel of the honeycomb sandwich type vacuum insulation panel according to the present disclosure and is an enlarged plan view of A portion of FIG. 3.
FIG. 5 is a diagram schematically illustrating a breakage prevention pad installed on a honeycomb sandwich panel of a honeycomb sandwich type vacuum insulation panel according to the present disclosure and is an enlarged plan view of B portion of FIG. 3.
FIG. 6 is a side view schematically illustrating a honeycomb sandwich type vacuum insulation panel system according to one embodiment of the present disclosure.
FIG. 7 is a side view schematically illustrating a multilayer stacked honeycomb sandwich type vacuum insulation panel system according to one embodiment of the present disclosure.
FIG. 8 is a side view schematically illustrating a honeycomb sandwich type vacuum insulation panel system according to another embodiment of the present disclosure.
FIG. 9 is a side view schematically illustrating an example of a multilayer stacked honeycomb sandwich type vacuum insulation panel system according to another embodiment of the present disclosure.
FIG. 10 is a side view schematically illustrating another example of a multilayer stacked honeycomb sandwich type vacuum insulation panel system according to another embodiment of the present disclosure.

### [Description of Reference Numerals]

1, 1', ..., 1ⁿ: honeycomb sandwich type vacuum insulation panel
3, 3': polyurethane foam type vacuum insulation panel
5: leakage prevention barrier
10: honeycomb sandwich panel
11: honeycomb structure
11a: honeycomb
12: filling space
16, 16': composite panel
17: insulation material
30: vacuum film
31: vacuum port
50: breakage prevention pad
51: insertion groove
100, 100', 100", 200, 200a, 200a', 200a", 200b, 200b', 200b": honeycomb sandwich type vacuum insulation panel system
500: cryogenic liquid fuel storage tank
501: primary gas barrier
503: secondary gas barrier

### [Best Mode]

The present disclosure relates to a cryogenic liquid fuel storage tank including a primary gas barrier, an insulation panel, and a secondary gas barrier for accommodating a cryogenic liquid fuel including liquid hydrogen therein; a honeycomb sandwich panel installed between the primary gas barrier and the secondary gas barrier to insulate the cryogenic liquid fuel storage tank; a vacuum film that accommodates the honeycomb sandwich panel inside and vacuumizes; and breakage prevention pads installed at each corner of the honeycomb sandwich panel in contact with the vacuum film to prevent breakage of the vacuum film.

### [Detailed Description]

The present disclosure may have various modifications and various embodiments, and specific embodiments are illustrated in the drawings and described in detail herein. However, it should be understood that the present disclosure is not limited to the specific embodiments, and includes all modifications, equivalents, or alternatives within the spirit and technical scope of the present disclosure.

In describing the respective drawings, like reference numerals have been used for like components. In the attached drawings, the dimensions of the structures are illustrated at a larger scale than actual for clarity of the present disclosure. Terms such as first, second, etc. may be used to describe various components, but the components should not be limited by the terms. The terms are used only for the purpose of distinguishing one component from another component. For example, a first component can be named a second component, and similarly, a second component can be named a first component, without departing from the scope of the present disclosure. Expressions in the singular include the plural unless the context clearly indicates otherwise.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

Hereinafter, preferred embodiments of the present disclosure will be described with reference to the attached drawings.

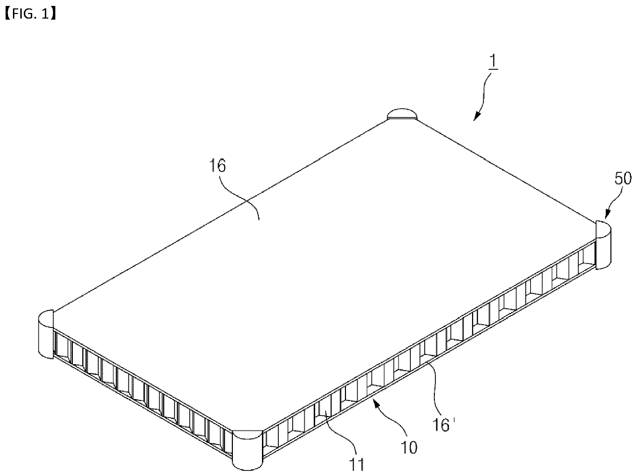

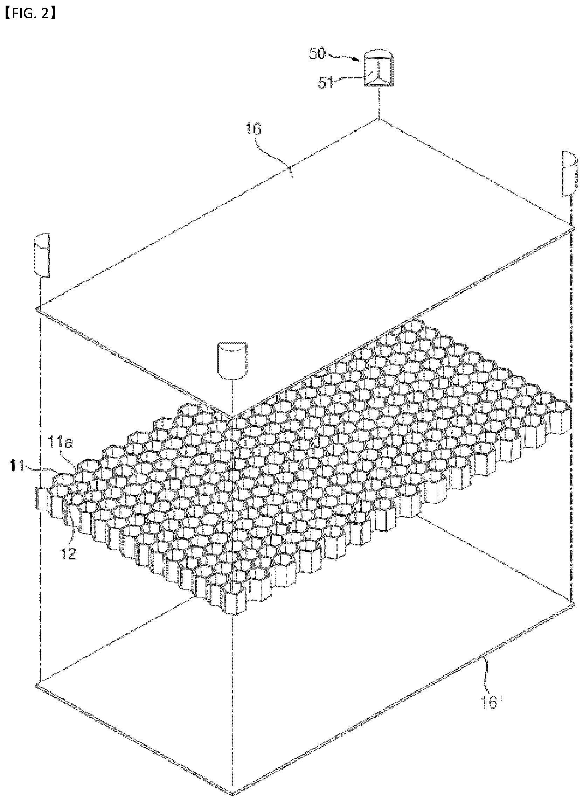

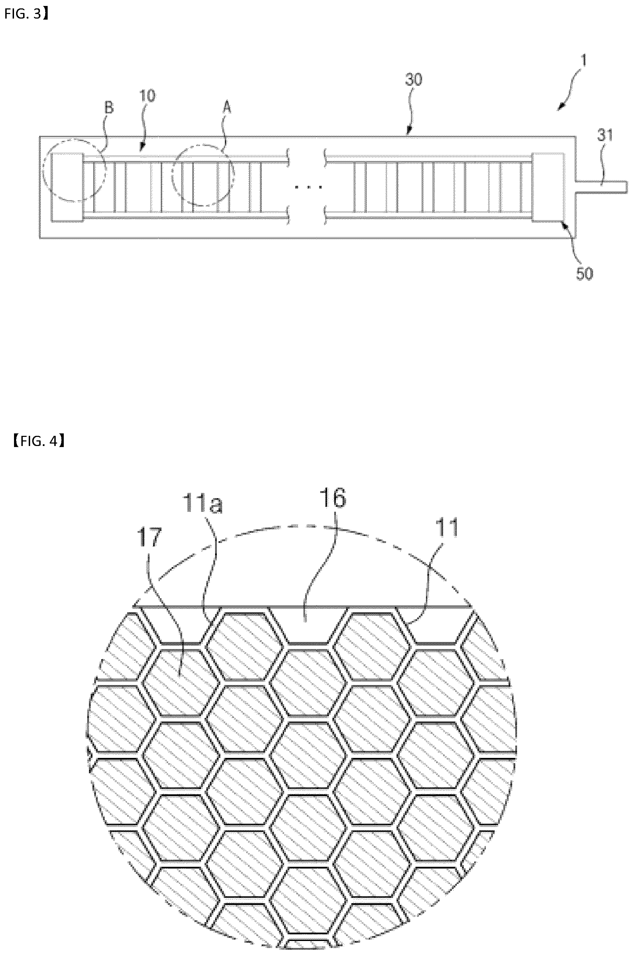

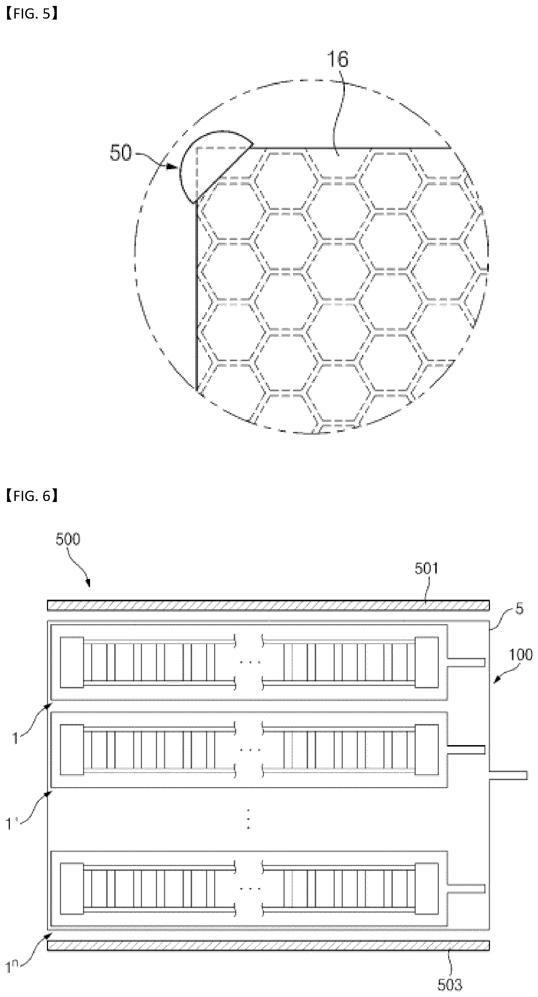

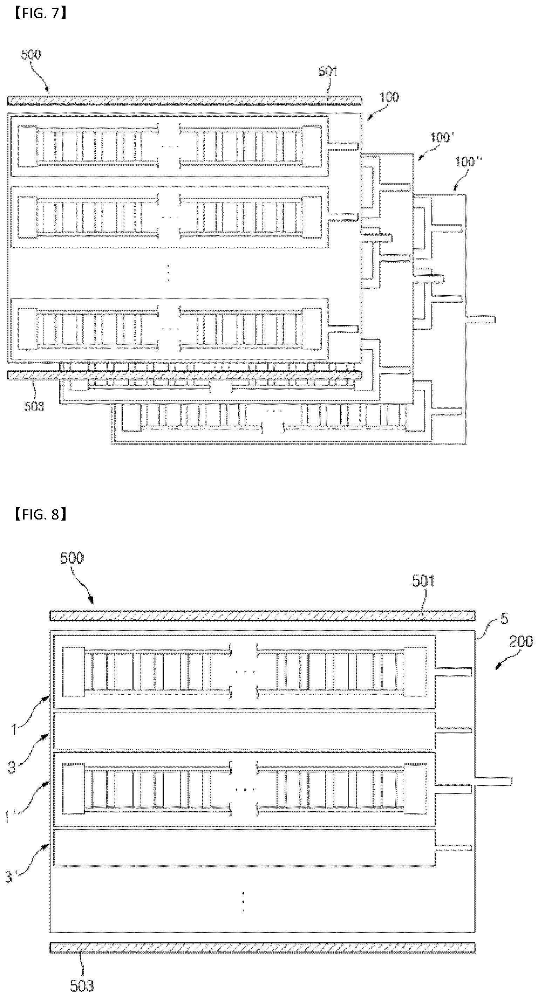

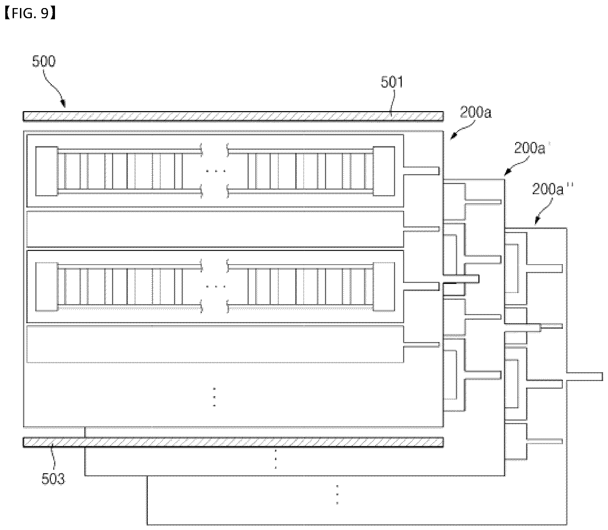

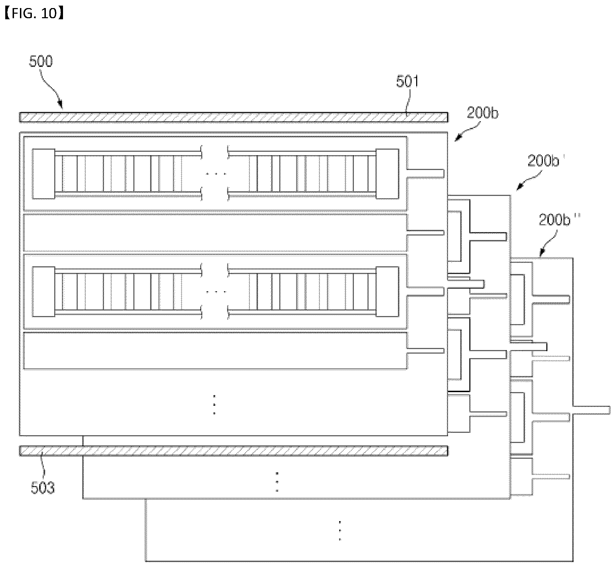

FIG. 1 is a perspective view schematically illustrating a honeycomb sandwich type vacuum insulation panel according to the present disclosure. FIG. 2 is an exploded perspective view schematically illustrating a honeycomb sandwich type vacuum insulation panel according to the present disclosure. FIG. 3 is a side view schematically illustrating a honeycomb sandwich type vacuum insulation panel according to the present disclosure. FIG. 4 is a diagram schematically illustrating a honeycomb sandwich type vacuum insulation panel of the honeycomb sandwich type vacuum insulation panel according to the present disclosure and is an enlarged plan view of A portion of FIG. 3. FIG. 5 is a diagram schematically illustrating a breakage prevention pad installed on a honeycomb sandwich panel of a honeycomb sandwich type vacuum insulation panel according to the present disclosure and is an enlarged plan view of B portion of FIG. 3. FIG. 6 is a side view schematically illustrating a honeycomb sandwich type vacuum insulation panel system according to one embodiment of the present disclosure. FIG. 7 is a side view schematically illustrating a multilayer stacked honeycomb sandwich type vacuum insulation panel system according to one embodiment of the present disclosure. FIG. 8 is a side view schematically illustrating a honeycomb sandwich type vacuum insulation panel system according to another embodiment of the present disclosure. FIG. 9 is a side view schematically illustrating an example of a multilayer stacked honeycomb sandwich type vacuum insulation panel system according to another embodiment of the present disclosure. FIG. 10 is a side view schematically illustrating another example of a multilayer stacked honeycomb sandwich type vacuum insulation panel system according to another embodiment of the present disclosure.

As shown in the drawings, a honeycomb sandwich type vacuum insulation panel 1 according to the present disclosure, for insulating a cryogenic liquid fuel storage tank 500 in which a cryogenic liquid fuel including liquid hydrogen or the like is accommodated therein, comprises a honeycomb sandwich panel 10, a vacuum film 30, and a breakage prevention pad 50.

Specifically, the honeycomb sandwich panel 10, which is installed between a primary gas barrier 501 and a secondary gas barrier 503 provided in a flat hexahedral-shaped cryogenic liquid fuel storage tank 500 for insulating the cryogenic liquid fuel storage tank 500, includes a honeycomb structure 11 connected formed by a plurality of honeycombs 11a, and composite panels 16, 16' installed in the honeycomb structure 11.

Here, the honeycomb structure 11 comprises a plurality of honeycombs 11a formed with open upper and lower portions, filling spaces 12 formed in the inside of the honeycombs 11a, and an insulation material 17 filled in each of the filling spaces 12 to improve the insulation properties of the honeycomb sandwich panel 10.

In this case, the insulation material 17 may comprise at least one of air, vacuum, aerogel, or insulation powder.

In one embodiment of the present disclosure, the filling space 12 of each honeycomb 11a is filled with air, vacuum, aerogel, or insulation powder as an insulation material 17, but it is possible to make various modifications, not limited thereto, if the filling space 12 is filled to facilitate insulation of the honeycomb sandwich panel 10.

Meanwhile, the composite panels 16, 16' are installed on the top surface and the bottom surface of the honeycomb structure 11, respectively.

Here, the composite panels 16, 16' are formed as a flat panel (FP) or a corner panel (CP) and are bonded and installed on the open upper portion and the lower portion of the plurality of honeycombs 11a formed in the honeycomb structure 11, respectively, so that the upper and lower portions of the honeycombs 11a can be sealed and airtightly processed.

At this time, the honeycomb structure 11 in which the plurality of honeycombs 11a are connected formed is preferably formed in the form of a square or rectangular shape in the overall outline, and composite panels 16, 16' of a size corresponding to the size of the honeycomb structure 11 are preferably installed on the top surface and the bottom surface of the honeycomb structure 11, but it is also possible to form and install the horizontal and vertical lengths of the honeycomb structure 11 corresponding to the area of the cryogenic liquid fuel storage tank 500.

In addition, it is also possible to form the honeycomb structure 11 as a single piece, and to install the composite panels 16, 16' of a corresponding size on the top surface and the bottom surface of the honeycomb structure 11 in the form of a cuboid or a cube, and then to manufacture and apply each honeycomb structure 11 manufactured as a single piece by interconnecting and coupling them to correspond to the length required at the site, and it is also possible to vary the thickness of the honeycomb structure 11 in a variety of ways.

In the present disclosure, the honeycomb structure 11 and the composite panels 16, 16' are formed in the form of a cuboid, but this is only an example, but not limited thereto, and various modifications can be performed.

Meanwhile, in the present disclosure, the composite panels 16, 16' are installed on the top surface and the bottom surface of the honeycomb structure 11, respectively, but the composite panels 16, 16' may also be installed on each side of the honeycomb structure 11, respectively, and other various modifications can be performed.

The composite panels 16, 16' may be formed as a composite of a resin and a glass fiber or a carbon fiber or an aramid fiber or a synthetic fiber.

In other words, the composite panels 16, 16' may be formed from a composite of resin and glass fiber or formed from a composite of resin and carbon fiber, or formed from a composite of resin and aramid fiber, or formed from a composite of resin and synthetic fiber.

The vacuum film 30 accommodates the honeycomb sandwich panel 10 inside and vacuumizes.

For this, the vacuum film 30 may be formed in two layers so that an accommodated space for accommodating the honeycomb sandwich panel 10 inside is formed, wherein one layer of the vacuum film 30 is disposed to contact the lower portion or one side surface of the honeycomb sandwich panel 10, and the other layer of the vacuum film 30 is disposed on the upper portion or the other side surface of the honeycomb sandwich panel 10, and then the respective edges of the vacuum film 30 are thermally fused.

At this time, the vacuum port 31 is protruded formed on one side of the vacuum film 30, and the vacuum film 30 can be vacuumed through the vacuum port 31. Here, the position of the vacuum port 31 can be variously modified.

Meanwhile, the vacuum film 30 may be made of a Nylon material that is not easily damaged or broken by external impact but is not limited thereto.

The breakage prevention pads 50 are installed at each corner of the honeycomb sandwich panel 10 in contact with the vacuum film 30 to prevent breakage of the vacuum film 30 by the sharp edges of the honeycomb sandwich panel 10.

For this, the breakage prevention pad 50 is a cover body in a semicircular shape, in which an insertion groove 51 corresponding to the shape of the corner is formed therein for insertion and coupling of each corner of the honeycomb sandwich panel 10.

In this case, the breakage prevention pad 50 may be made of a Nylon material.

Meanwhile, the honeycomb sandwich panel 10 according to the present disclosure can be used by using the honeycomb structure 11 alone, or by installing composite panels 16, 16' on the top surface and bottom surface of the honeycomb structure 11.

Here, in the case of using the honeycomb structure 11 alone, the filling space 12 formed in the plurality of honeycombs 11a of the honeycomb structure 11 can be filled with insulation material 17, and the honeycomb structure 11 filled with the insulation material 17 can be vacuumed by installing a breakage prevention pad 50 in the vacuum film 30 after installing it.

In this case, the length in the vertical direction of the insertion groove 51 of the breakage prevention pad 50 may be formed corresponding to the thickness of the honeycomb structure 11 without the composite panels 16, 16'.

Hereinafter, a manufacturing process of a honeycomb sandwich type vacuum insulation panel according to the present disclosure will be briefly described with reference to the drawings.

First, the filling space 12 formed in each honeycomb 11a of the honeycomb structure 11 formed in a certain length is filled with insulation material 17. In this case, filling each of the filling spaces 12 with at least one of air, vacuum, aerogel, or insulation powder.

Then, the honeycomb sandwich panel 10 is manufactured by installing the composite panels 16, 16' on the top surface and the bottom surface of the honeycomb structure 11.

A breakage prevention pad 50 is installed at each corner of the honeycomb sandwich panel 10 manufactured in this manner. In this case, the insertion grooves 51 of the breakage prevention pads 50 are inserted into the respective corners of the honeycomb sandwich panel 10.

Then, after installing the honeycomb sandwich panel 10 so as to be accommodated within the vacuum film 30, the vacuum film 30 is vacuumed through the vacuum port 31 of the vacuum film 30 to manufacture the honeycomb sandwich type vacuum insulation panel 1.

The honeycomb sandwich type vacuum insulation panel 1 manufactured as described above can be installed between the primary gas barrier 501 and the secondary gas barrier 503 of the cryogenic liquid fuel storage tank 500 to insulate the cryogenic liquid fuel storage tank 500.

Meanwhile, as shown in FIG. 6, the honeycomb sandwich type vacuum insulation panel 1 according to the present disclosure can be accommodated in a leakage prevention barrier 5 and vacuumed to form a honeycomb sandwich type vacuum insulation panel system 100.

In this case, the leakage prevention barrier 5 may be made of a Nylon material that is not easily torn or broken by external impact.

In one embodiment of the present disclosure, the leakage prevention barrier 5 is made of a Nylon material, but it is preferred that the leakage prevention barrier 5 is made of an insulation material.

Specifically, the leakage prevention barrier 5 may be made of a combination of insulation materials comprising any one or more of LLDPE (Liner Low Density PolyEthylene), PET or PI manufactured by aluminum deposition, EVOH (Ethylene Vinyl alcohol), AlOx (aluminum oxide), not limited thereto, and various other modifications can be performed.

Meanwhile, a vacuum port (not shown) is also formed in the leakage prevention barrier 5 for vacuuming the honeycomb sandwich type vacuum insulation panel 1 accommodated therein. Again, the position of the vacuum port can be variously modified.

Here, the honeycomb sandwich type vacuum insulation panels 1, 1', ...,1ⁿ accommodated within the leakage prevention barrier 5 are provided in at least one plurality of pieces, but the honeycomb sandwich type vacuum insulation panels 1, 1', ... ,1ⁿ accommodated within the leakage prevention barrier 5 may be disposed in a plurality of pieces with respect to the thickness direction of the vacuum insulation panel 1.

As described above, the plurality of honeycomb sandwich type vacuum insulation panels 1, 1', ..·, 1ⁿ may be disposed and accommodated in the thickness direction in the leakage prevention barrier 5 and then vacuumed to form a honeycomb sandwich type vacuum insulation panel system 100.

Thus, between the primary gas barrier 501 and the secondary gas barrier 503 provided in the cryogenic liquid fuel storage tank 500, the honeycomb sandwich type vacuum insulation panel system 100, 100', 100" according to one embodiment of the present disclosure, as shown in FIG. 7, can insulate the cryogenic liquid fuel storage tank 500 by forming a plurality of honeycomb sandwich type vacuum insulation panel systems 100, 100', 100" disposed in the horizontal direction of the vacuum insulation panel system 100 to form a multilayer.

Meanwhile, as shown in FIG. 8, the honeycomb sandwich type vacuum insulation panel system 200 according to another embodiment of the present disclosure may be disposed in a plurality of honeycomb sandwich type vacuum insulation panels 1, 1' and polyurethane foam type vacuum insulation panels 3, 3' in the leakage prevention barrier 5 with respect to the thickness direction.

In other words, the polyurethane foam type vacuum insulation panels 3, 3' commonly applied between the primary gas barrier 501 and the secondary gas barrier 503 provided in the cryogenic liquid fuel storage tank 500 and the honeycomb sandwich type vacuum insulation panel 1, 1' are disposed in the leakage prevention barrier 5 in the thickness direction, but the polyurethane foam type vacuum insulation panels 3, 3' and the honeycomb sandwich type vacuum insulation panels 1, 1' are alternately mixed and disposed to form the honeycomb sandwich type vacuum insulation panel system 200.

In this way, the honeycomb sandwich type vacuum insulation panel system 200 is manufactured by mixing and disposing the polyurethane foam type vacuum insulation panels 3, 3' and the honeycomb sandwich type vacuum insulation panels 1, 1' in the leakage prevention barrier 5, when the manufactured vacuum insulation panel system 200 is applied to the cryogenic liquid fuel storage tank 500, the honeycomb sandwich type vacuum insulation panel and vacuum insulation panel system 200 can be applied only to an extent that satisfies the minimum structural strength and stiffness required by the cryogenic liquid fuel storage tank 500.

In other words, since the structural strength and stiffness may be higher than the required strength and stiffness when the vacuum insulation panel system 100 comprising only the honeycomb sandwich type vacuum insulation panels 1, 1' is installed in the cryogenic liquid fuel storage tank 500, it is necessary to use the polyurethane foam type vacuum insulation panels 3, 3' with different heat transfer coefficients and the honeycomb sandwich type vacuum insulation panels 1, 1', as shown in FIG. 8, are mixed to manufacture the vacuum insulation panel system 200, which can be advantageous in terms of cost compared to the vacuum insulation panel system 100 comprising only the honeycomb sandwich type vacuum insulation panels 1, 1', and can meet the structural robustness and stiffness required in the field.

Here, the honeycomb sandwich type vacuum insulation panel system 200 formed by mixing the polyurethane foam type vacuum insulation panels 3, 3' and the honeycomb sandwich type vacuum insulation panels 1, 1', wherein the vacuum insulation panel system 200 is disposed horizontally between the primary gas barrier 501 and the secondary gas barrier 503 provided in the cryogenic liquid fuel storage tank 500 to form a multilayer, thereby the cryogenic liquid fuel storage tank 500 can be insulated.

In this case, any one of the multilayer stacked vacuum insulation panel systems 200a, as shown in FIG. 9, comprises a polyurethane foam type vacuum insulation panel 3, 3' and a honeycomb sandwich type vacuum insulation panel system 1, 1' are alternately disposed with respect to the thickness direction, and the other vacuum insulation panel system 200a', which is disposed in the horizontal direction thereof, is disposed in the opposite alternation, wherein the polyurethane foam type vacuum insulation panels 3, 3' and the honeycomb sandwich type vacuum insulation panels 1, 1' are disposed, and another vacuum insulation panel system 200a" stacked in the horizontal direction thereof may be formed in the same form as any one of the vacuum insulation panel systems 200a so that the polyurethane foam type vacuum insulation panels 3, 3' and the honeycomb sandwich type vacuum insulation panels 1, 1' are alternately stacked in the same position with respect to the horizontal direction of each of the vacuum insulation panel systems 200a, 200a', 200a".

In other words, between the primary gas barrier 501 and the secondary gas barrier 503 provided in the cryogenic liquid fuel storage tank 500, the honeycomb sandwich type vacuum insulation panel 1, 1' is located in the upper portion or the lower portion of the thickness direction of the polyurethane foam type vacuum insulation panel 3, 3', and the honeycomb sandwich type vacuum insulation panel 1, 1' is located in the upper portion or the lower portion of the thickness direction of the polyurethane foam type vacuum insulation panel 3, 3' are positioned such that the polyurethane foam type vacuum insulation panels 3, 3' and the honeycomb sandwich type vacuum insulation panels 1, 1' are alternately stacked with respect to the thickness direction, and then each vacuum insulation panel 1, 1' is disposed in a horizontal direction to form a multilayer stacked honeycomb sandwich type vacuum insulation panel system 200a, 200a', 200a".

According to the structure as described above, by installing the honeycomb sandwich type vacuum insulation panel system 200 of the present disclosure in the cryogenic liquid fuel storage tank 500, the cryogenic liquid fuel storage tank 500, which stores liquefied natural gas in a cryogenic state, can be insulated and prevent damage or breakage due to thermal shock.

Meanwhile, as shown in FIG. 10, any one multilayer stacked vacuum insulation panel system 200b comprises a polyurethane foam type vacuum insulation panel 3, 3' and a honeycomb sandwich type vacuum insulation panel 1, 1' are alternately disposed with respect to the thickness direction, and another vacuum insulation panel system 200b' and another vacuum insulation panel system 200b" disposed in the horizontal direction are likewise composed of a polyurethane foam type vacuum insulation panel 3, 3' and the honeycomb sandwich type vacuum insulation panels 1, 1' are alternately disposed with respect to the thickness direction, so that the polyurethane foam type vacuum insulation panels 3, 3' are located in the same position with respect to the horizontal direction of each of the vacuum insulation panel systems 200b, 200b', 200b", or the honeycomb sandwich type vacuum insulation panels 1, 1' are stacked so that the polyurethane foam type vacuum insulation panels 3, 3' are located in the same position.

In other words, the polyurethane foam type vacuum insulation panels 3, 3' are continuously disposed in the horizontal direction between the primary gas barrier 501 and the secondary gas barrier 503 provided in the cryogenic liquid fuel storage tank 500, or the honeycomb sandwich type vacuum insulation panels 1, 1' are continuously disposed and positioned in the horizontal direction of the honeycomb sandwich type vacuum insulation panel 1, 1', etc., so that the same vacuum insulation panel can be repeatedly stacked with respect to the thickness direction and the horizontal direction to form the vacuum insulation panel system 200B.

Although the honeycomb sandwich panel 10, the honeycomb sandwich type vacuum insulation panel 1, and the vacuum insulation panel system 100 of the present disclosure are described as an example, they are installed between the primary gas barrier 501 and the secondary gas barrier 503 of a flat hexahedral-shaped membrane type cryogenic liquid fuel storage tank 500 to insulate the cryogenic liquid fuel storage tank 500, not limited to application to the cryogenic liquid fuel storage tank 500 of a liquefied cargo carrier, it will be apparent that the above structure may also be applied to a marine structure, an architectural structure, or a civil structure, etc., so as to minimize heat losses and satisfy structural robustness to various loads, and may be applied to various other fields.

As above, the present disclosure has been described in more detail with respect to specific embodiments, but it will be readily apparent to those of ordinary skill in the art that various modifications and variations are possible without departing from the spirit and scope of the disclosure as set forth in the appended claims.

### [Industrial Applicability]

The present disclosure is an optimal invention that can improve and maximize insulation of a cryogenic liquid fuel storage tank and minimize heat loss by forming an insulation panel installed between a primary gas barrier and a secondary gas barrier of a cryogenic liquid fuel storage tank to a honeycomb sandwich panel of a honeycomb structure.

## Claims

1. With respect to a cryogenic liquid fuel storage tank comprising a primary gas barrier, an insulation panel, and a secondary gas barrier for accommodating a cryogenic liquid fuel including liquid hydrogen therein,
a honeycomb sandwich type vacuum insulation panel, comprising:
a honeycomb sandwich panel installed between the primary gas barrier and the secondary gas barrier to insulate the cryogenic liquid fuel storage tank;
a vacuum film that accommodates the honeycomb sandwich panel inside and vacuumizes; and
breakage prevention pads installed at each corner of the honeycomb sandwich panel in contact with the vacuum film to prevent breakage of the vacuum film.

2. The honeycomb sandwich type vacuum insulation panel of claim 1,
wherein the honeycomb sandwich panel comprises a honeycomb structure in which a plurality of honeycombs is connected formed, and a composite panel installed in the honeycomb structure.

3. The honeycomb sandwich type vacuum insulation panel of claim 2,
wherein the honeycomb structure comprises a plurality of honeycombs formed with open upper and lower portions, filling spaces formed within the honeycombs, and insulation material filled in each of the filling space.

4. The honeycomb sandwich type vacuum insulation panel of claim 3,
wherein the insulation material comprises at least one of air, vacuum, aerogel, or insulation powder.

5. The honeycomb sandwich type vacuum insulation panel of claim 2,
wherein the honeycomb structure is used alone or with the composite panels installed on the top surface and bottom surface of the honeycomb structure.

6. The honeycomb sandwich type vacuum insulation panel of claim 2,
wherein the composite panel is formed from a resin and a composite of glass fibers or carbon fibers or aramid fibers or composite fibers.

7. The honeycomb sandwich type vacuum insulation panel of claim 1,
wherein the breakage prevention pad is a semicircular cover body, and an insertion groove corresponding to the shape of the corner is formed therein for insertion and coupling of each corner of the honeycomb sandwich panel.

8. A honeycomb sandwich type vacuum insulation panel system **characterized in that** the at least one honeycomb sandwich type vacuum insulation panel according to any one of claims 1 to 7, is accommodated in a leakage prevention barrier and vacuumed.

9. The honeycomb sandwich type vacuum insulation panel system of claim 8
wherein the leakage prevention barrier is made of a combination of insulation materials comprising any one or more of Nylon, LLDPE, PET, PI, EVOH, and AlOₓ.

10. The honeycomb sandwich type vacuum insulation panel system of claim 8
wherein a plurality of honeycomb sandwich type vacuum insulation panels is disposed in the leakage prevention barrier in a thickness direction and is stacked.
